# EUROPEAN PATENT APPLICATION

(11) **EP 4 597 696 A1**
(43) Date of publication of application: **06.08.2025**
(21) Application number: 23904071.0
(22) Date of filing: 15.12.2023
(51) Int. Cl.: H01M 50/105, H01M 50/131, H01M 50/186

(54) **SECONDARY BATTERY**

(30) Priority: 16.12.2022 KR 20220176561
(71) Applicant: LG Energy Solution, Ltd., Seoul 07335 (KR)
(72) Inventor: HWANG, Soon Choel, Daejeon 34122 (KR); LEE, Sung Won, Daejeon 34122 (KR); BAEK, Sang Min, Daejeon 34122 (KR); YI, Young Mi, Daejeon 34122 (KR); HONG, Eui Jin, Daejeon 34122 (KR)
(74) Representative: Goddar, Heinz J.
(86) International application number: PCT/KR2023/020793
(87) International publication number: WO 2024/128872

(57) **Abstract**

The present invention relates to a secondary battery including: an electrode assembly; and a pouch type exterior including an accommodation part, which accommodates the electrode assembly, and a sealing part provided to surround at least a portion of the accommodation part to seal the accommodation part, wherein the sealing part includes: a first folding portion provided so that an outer end of the sealing part is folded toward the accommodation part along a first folding line spaced a first distance from the outer end of the sealing part toward the accommodation part; and a second folding portion provided so that the first folding portion is folded toward the accommodation part along a second folding line spaced a second distance from the first folding line toward the accommodation part, wherein, when a predetermined line spaced a predetermined distance from the outer end of the sealing part toward the accommodation part is referred to as a sealing line, the sealing part includes a sealed portion in which a portion from the outer end of the sealing part to the sealing line is sealed by fusion, wherein, when a distance from the outer end of the sealing part to the accommodation part is referred to as a width of the sealing part, a distance from the sealing line to the accommodation part is 45% to 55% of the width of the sealing part.

## Description

### TECHNICAL FIELD

### CROSS-REFERENCE TO RELATED APPLICATION

The present application claims the benefit of the priority of Korean Patent Application Nos. 10-2022-0176561, filed on December 16, 2022, and 10-2023-0182678, filed on December 15, 2023, which are hereby incorporated by reference in their entirety.

### TECHNICAL FIELD

The present disclosure herein relates to a secondary battery.

### BACKGROUND ART

In general, secondary batteries refer to batteries, which are chargeable and dischargeable unlike non-rechargeable primary batteries, and are widely used in electronic devices such as mobile phones, notebook computers and camcorders, electric vehicles, or the like. In particular, lithium secondary batteries have a larger capacity and a higher energy density than nickel-cadmium batteries or nickel-hydrogen batteries, and thus utilization thereof is on a rapidly increasing trend.

According to the shape of a battery case, the secondary batteries may be classified into a cylindrical type or prismatic type battery, in which an electrode assembly is embedded in a cylindrical or prismatic metal can, a pouch type battery in which an electrode assembly is embedded in a pouch type case made of a laminate sheet, and the like.

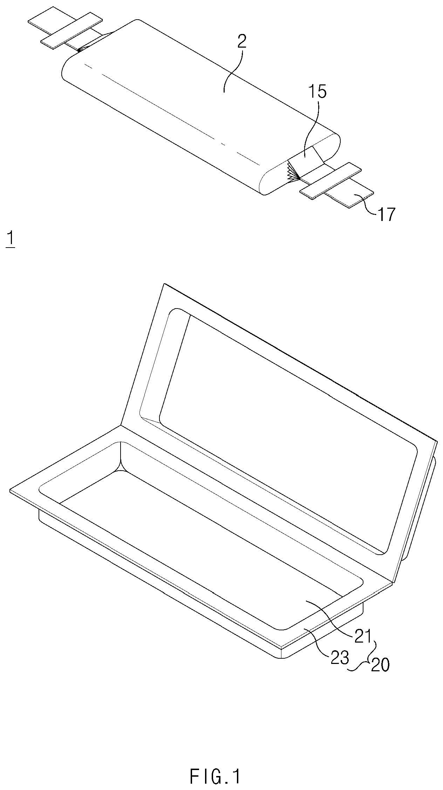

FIG. 1 is a view illustrating one example of a pouch type secondary battery. A pouch type secondary battery 1 (pouch type cell) includes an electrode assembly 2 in which an electrode and a separator are alternately stacked, and a pouch type exterior 20 in which the electrode assembly 2 is accommodated. Electrode tabs 15 may be connected to electrodes of the electrode assembly 2, respectively. The electrode tabs 15 may be welded to each other in a predetermined area, and then be connected to an electrode lead 17 by welding. The exterior 20 includes an accommodation part 21 in order to accommodate the electrode assembly 2. The accommodation part 21 of the exterior 20 may be provided in one or two recess-shaped portions. FIG. 1 illustrates the accommodation part 21 provided in two recess-shaped portions. A sealing part 23 (terrace) is formed around a circumference of the accommodation part 21 by sealing. In order to reduce a space occupied by the secondary battery to improve volume energy density of the secondary battery, the sealing part 23 of the secondary battery may be folded toward the accommodation part 21. This folding may be applied once or two or more times.

Recently, in order to improve safety of the pouch type secondary battery to increase quality of the pouch type secondary battery, a very high increase in insulation resistance of the pouch type secondary battery (e.g., enhancing resistance from a conventional level of 1 MΩ to a level of 100 MΩ) is required. However, the folding of the sealing part 23 may cause an insulation resistance defect to lead to a reduction in insulation resistance. This problem may be made bigger when the sealing part 23 is folded multiple times.

### DISCLOSURE OF THE INVENTION

### TECHNICAL PROBLEM

An object of the present invention is to provide a secondary battery having a folding structure in which, even when a sealing part has been folded multiple times, a reduction in insulation resistance does not occur, or the reduction in insulation resistance is minimized.

### TECHNICAL SOLUTION

In an embodiment, a secondary battery may include: an electrode assembly; and a pouch type exterior including an accommodation part, which accommodates the electrode assembly, and a sealing part provided to surround at least a portion of the accommodation part to seal the accommodation part, wherein the sealing part includes: a first folding portion provided so that an outer end of the sealing part is folded toward the accommodation part along a first folding line spaced a first distance from the outer end of the sealing part toward the accommodation part; and a second folding portion provided so that the first folding portion is folded toward the accommodation part along a second folding line spaced a second distance from the first folding line toward the accommodation part, wherein, when a predetermined line spaced a predetermined distance from the outer end of the sealing part toward the accommodation part is referred to as a sealing line, the sealing part includes a sealed portion in which a portion from the outer end of the sealing part to the sealing line is sealed by fusion, wherein, when a distance from the outer end of the sealing part to the accommodation part is referred to as a width of the sealing part, a distance from the sealing line to the accommodation part is 45% to 55% of the width of the sealing part.

In another embodiment, a distance from the outer end of the sealing part to the first folding line may be 60% to 80% of a distance from the outer end of the sealing part to the sealing line.

In still another embodiment, a distance from the accommodation part to the second folding line may be 18% to 34% of the distance from the sealing line to the accommodation part.

In still another embodiment, the sealing line may be positioned between the first folding line and the second folding line.

In still another embodiment, a secondary battery may include: an electrode assembly; and a pouch type exterior including an accommodation part, which accommodates the electrode assembly, and a sealing part provided to surround at least a portion of the accommodation part to seal the accommodation part, wherein the sealing part includes: a first folding portion provided so that an outer end of the sealing part is folded toward the accommodation part along a first folding line which is spaced a first distance from the outer end of the sealing part toward the accommodation part and is provided to be parallel to the outer end of the sealing part; and a second folding portion provided so that the first folding portion is folded toward the accommodation part along a second folding line which is spaced a second distance from the first folding line toward the accommodation part and is provided to be parallel to the first folding line, wherein, when a distance from the outer end of the sealing part to the accommodation part is referred to as a width of the sealing part, the first distance is 34.65% to 42.35% of the width of the sealing part, and the second distance is 43.65% to 53.35% of the width of the sealing part.

In still another embodiment, when a predetermined line, which is spaced a predetermined distance from the outer end of the sealing part toward the accommodation part and is provided to be parallel to the outer end of the sealing part, is referred to as a sealing line, in the sealing part, a portion from the outer end of the sealing part to the sealing line may be sealed by fusion. The sealing line may be positioned between the first folding line and the second folding line, and a distance from the second folding line to the sealing line may be 20% or more of the width of the sealing part.

In still another embodiment, when a predetermined line, which is spaced a predetermined distance from the outer end of the sealing part toward the accommodation part and is provided to be parallel to the outer end of the sealing part, is referred to as a sealing line, in the sealing part, a portion from the outer end of the sealing part to the sealing line may be sealed by fusion. The sealing line may be positioned between the first folding line and the second folding line, and a distance from the second folding line to the sealing line may be 40% or more of a distance from the outer end of the sealing part to the sealing line.

In still another embodiment, when a predetermined line, which is spaced a predetermined distance from the outer end of the sealing part toward the accommodation part and is provided to be parallel to the outer end of the sealing part, is referred to as a sealing line, in the sealing part, a portion from the outer end of the sealing part to the sealing line may be sealed by fusion, and a portion from the sealing line to the accommodation part may not be fused. The sealing line may be positioned between the first folding line and the second folding line, and a distance from the sealing line to the accommodation part may be 40% or more of the width of the sealing part.

In still another embodiment, a secondary battery may include: an electrode assembly; and a pouch type exterior including an accommodation part, which accommodates the electrode assembly, and a sealing part provided to surround at least a portion of the accommodation part to seal the accommodation part, wherein the sealing part includes: a first folding portion provided so that an outer end of the sealing part is folded toward the accommodation part along a first folding line which is spaced a first distance from the outer end of the sealing part toward the accommodation part and is provided to be parallel to the outer end of the sealing part; and a second folding portion provided so that the first folding portion is folded toward the accommodation part along a second folding line which is spaced a second distance from the first folding line toward the accommodation part and is provided to be parallel to the first folding line, wherein, when a predetermined line, which is spaced a predetermined distance from the outer end of the sealing part toward the accommodation part and is provided to be parallel to the outer end of the sealing part, is referred to as a sealing line, in the sealing part, a portion from the outer end of the sealing part to the sealing line is sealed by fusion, and a distance from the second folding line to the sealing line is 40% or more of a distance from the outer end of the sealing part to the sealing line.

In still another embodiment, the sealing line may be positioned between the first folding line and the second folding line.

### ADVANTAGEOUS EFFECTS

According to the present invention, through the optimization of the sealing range or the folding position, the reduction in insulation resistance may not occur or the reduction in insulation resistance may be minimized even when the sealing part has been folded multiple times.

In addition, according to the present invention, the portion (die-seal gap), which has not been fused, of the sealing part may be sufficiently secured to improve the insulation resistance defect rate.

### BRIEF DESCRIPTION OF THE DRAWINGS

FIG. 1 is a view illustrating one example of a pouch type secondary battery.
FIG. 2 is a perspective view illustrating a secondary battery according to an embodiment of the present invention.
FIGS. 3 to 6 are views sequentially illustrating operations of manufacturing the secondary battery in FIG. 2.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

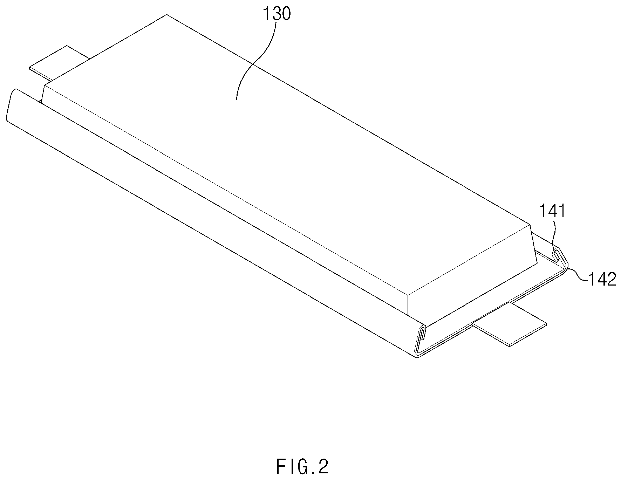

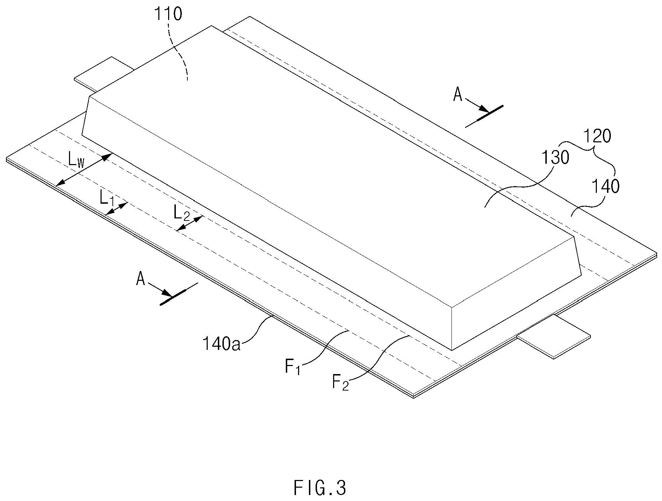

FIG. 2 is a perspective view illustrating a secondary battery according to an embodiment of the present invention. FIGS. 3 to 6 are views sequentially illustrating operations of manufacturing the secondary battery in FIG. 2. As illustrated in FIG. 3, the secondary battery according to this embodiment may include an electrode assembly 110 and an exterior 120. FIG. 3 is a perspective view illustrating a state before a sealing part 140 (141 and 142) of the secondary battery in FIG. 2 is folded.

The electrode assembly 110 (see reference numeral 2 in FIG. 1) may be provided by stacking an electrode and a separator alternately. The electrode may include a positive electrode and a negative electrode. The electrode assembly 110 may include an electrode tab (see FIG. 1) connected to the electrode. The electrode tab may be separately provided, or may be provided as a portion of a current collector constituting the electrode.

The exterior 120 may be a pouch type exterior 120 that is formed through molding of a laminate sheet to accommodate the electrode assembly 110. The pouch type exterior 120 may include an accommodation part 130 in order to accommodate the electrode assembly 110. The pouch type exterior 120 may be provided so that two exteriors disposed to face each other are coupled to be sealed to each other in a state in which the electrode assembly 110 is accommodated. Here, edges of the two exteriors may be entirely sealed to each other. The sealing part 140 may be formed through this sealing. Alternatively, the pouch type exterior may be provided by folding a single exterior (see FIG. 1). Here, an edge of a remaining portion except the folded portion of the single exterior may be sealed. FIGS. 3 and the like illustrate the exterior 120 in which the accommodation part 130 is provided with one recess-shaped portion.

The pouch type exterior 120 may be manufactured from a laminate sheet including a metal layer made of aluminum or the like, a first resin layer disposed on an inner surface of the metal layer, and a second resin layer disposed on an outer surface of the metal layer. The first resin layer may be a layer made of polypropylene (PP). The first resin layer requires high insulating properties and corrosion resistance, and the first resin layer may be made of other resins that satisfy this requirement. The second resin layer may be a layer made of polyethylene terephthalate (PET). The second resin layer needs to protect the secondary battery and also to electrically insulate the secondary battery, and the second resin layer may be made of other resins that satisfy this requirement.

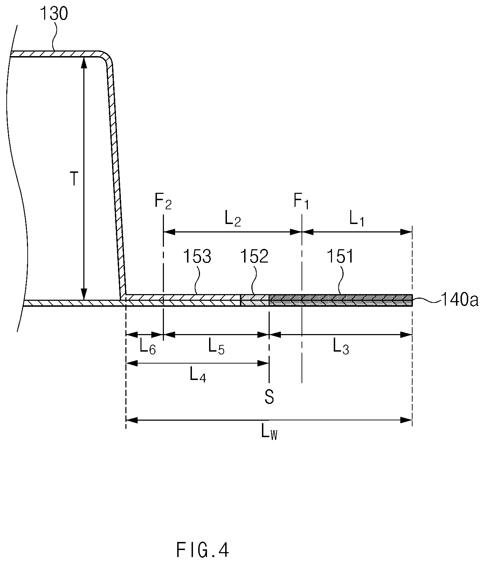

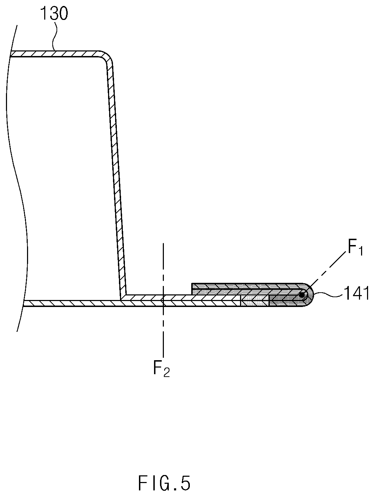

As illustrated in FIGS. 3 and 4, the sealing part 140 may include a first folding portion 141 (see FIGS. 2 and 5) provided so that an outer end 140a of the sealing part 140 is folded toward the accommodation part 130 along a first folding line F₁ spaced a first distance L₁ from the outer end 140a of the sealing part 140 toward the accommodation part 130. The first folding line F₁ may be provided to be parallel to the outer end 140a of the sealing part 140. For reference, FIG. 4 is a cross-sectional view of the secondary battery taken along line A-A in FIG. 3. FIG. 5 is a cross-sectional view illustrating the secondary battery in which the outer end of the sealing part of the secondary battery in FIG. 4 is folded along the first folding line to provide the first folding portion. For convenience in illustration, the electrode assembly is not illustrated in FIGS. 4 and 5.

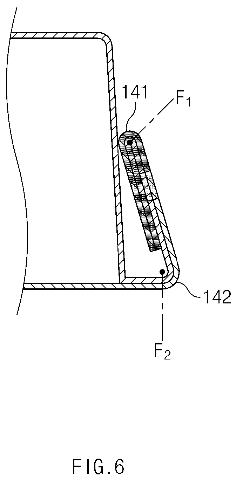

The sealing part 140 may include a second folding portion 142 (see FIGS. 2 and 6) provided so that the first folding portion 141 is folded toward the accommodation part 130 along a second folding line F₂ spaced a second distance L₂ from the first folding line F₁ toward the accommodation part 130. The second folding line F₂ may be provided to be parallel to the first folding line F₁. For reference, FIG. 6 is a cross-sectional view illustrating the secondary battery in which the first folding portion of the sealing part of the secondary battery in FIG. 5 is folded along the second folding line to provide the second folding portion. For convenience in illustration, the electrode assembly is not illustrated in FIG. 6.

As illustrated in FIG. 4, when a predetermined line spaced a predetermined distance L₃ from the outer end 140a of the sealing part 140 toward the accommodation part 130 is referred to as a sealing line S, the sealing part 140 may include a sealed portion 151 in which a portion from the outer end 140a of the sealing part 140 to the sealing line S is sealed by fusion. The sealing line S may be provided to be parallel to the outer end 140a of the sealing part 140. The sealing line S may be positioned between the first folding line F₁ and the second folding line F₂. The fusion may be thermal-fusion.

When a distance from the outer end 140a of the sealing part 140 to the accommodation part 130 is referred to as a width L_{W} of the sealing part 140, a distance L₄ from the sealing line S to the accommodation part 130 may be 45% to 55% of the width L_{W} of the sealing part 140. Accordingly, the distance L₃ from the outer end 140a of the sealing part 140 to the sealing line S may be 45% to 55% of the width L_{W} of the sealing part 140. For example, if the distance L₄ is 45% of the width L_{W} of the sealing part 140, the distance L₃ may be 55% of the width L_{W} of the sealing part 140. The sum of the distance L₄ and the distance L₃ may be equal to the width L_{W} of the sealing part 140.

For example, the width L_{W} of the sealing part 140 may be 10 mm, and the distance L₃ from the outer end 140a of the sealing part 140 to the sealing line S may be 5 mm that is 50% of the width L_{W} of the sealing part 140. Alternatively, the width L_{W} of the sealing part 140 may be 10 mm, and the distance L₄ from the sealing line S to the accommodation part 130 may be 5 mm that is 50% of the width L_{W} of the sealing part 140.

The sealing part 140 may include the sealed portion 151 described above, and non-sealed portions 152 and 153 (from the sealing line of the sealing part to a boundary between the sealing part and the accommodation part) to be described later. A portion 152 of the non-sealed portions 152 and 153 is not designed to be fused, but may be temporarily bonded by heat or the like introduced during the sealing of the sealed portion 151. When the distance L₄ from the sealing line S to the accommodation part 130 is less than 45% of the width L_{W} of the sealing part 140, it may be difficult to sufficiently secure a spaced distance between a temporarily bonded area 152, which is temporarily bonded as above, and the second folding line F₂. Accordingly, there is a concern that a folding knife for pressing the second folding line F₂ presses the temporarily bonded area 152 together. When the folding knife presses the temporarily bonded area 152 to cause a crack in the temporarily bonded area 152, an insulation resistance defect may occur. The non-sealed portion 153 of the sealing part 140 may have a gap due to gas generated inside the accommodation part 130 to serve as a space capable of accommodating the gas. However, when the distance L₄ is less than 45% of the width L_{W} of the sealing part 140, the space capable of accommodating gas may not be sufficiently defined when the gas is generated. This may cause deterioration in high-temperature storage durability of the secondary battery.

When the distance L₄ from the sealing line S to the accommodation part 130 is more than 55% of the width L_{W} of the sealing part 140, the distance L₃ from the outer end 140a of the sealing part 140 to the sealing line S may be relatively decreased to cause a concern that the width of the sealed portion 151 is not sufficient. When the width of the sealed portion 151 is not sufficient, a sealing performance of the sealing part 140 may not be sufficient.

As a sealing range or a non-sealing range is optimized as above, even when the sealing part 140 has been folded multiple times, a reduction in insulation resistance may not occur, or the reduction in insulation resistance may be minimized, and also the deterioration in high-temperature storage durability or the deterioration in sealing performance may be prevented.

A distance from the outer end 140a of the sealing part 140 to the first folding line F₁, i.e., the first distance L₁, may be 60% to 80% of the distance L₃ from the outer end 140a of the sealing part 140 to the sealing line S. For example, the distance L₃ from the outer end 140a of the sealing part 140 to the sealing line S may be 5 mm, and the distance L₁ from the outer end 140a of the sealing part 140 to the first folding line F₁ may be 3.85 mm that is 77% of the distance L₃.

As illustrated in FIG. 5, the outer end 140a of the sealing part 140 may be folded along the first folding line F₁ to provide the first folding portion 141, and when the distance L₁ (see FIG. 4) is less than 60% of the distance L₃ (see FIG. 4), a length of a portion folded onto an upper side of a spread portion of the sealing part 140 (see the sealing part of an upper layer of the sealing part having two-layers structure in FIG. 5) may be decreased. When the length of the folded portion is decreased, it may be difficult to stably maintain a folded shape of the sealing part. When the distance L₁ is more than 80% of the distance L₃, it may be difficult to sufficiently secure a spaced distance between the temporarily bonded area 152 and the first folding line F₁. Accordingly, there is a concern that a folding knife for pressing the first folding line F₁ presses the temporarily bonded area 152 together. When the folding knife presses the temporarily bonded area 152 to cause a crack in the temporarily bonded area 152, an insulation resistance defect may occur.

A distance L₆ from the accommodation part 130 to the second folding line F₂ may be 18% to 34% of the distance L₄ from the sealing line S to the accommodation part 130. For example, the distance L₄ from the sealing line S to the accommodation part 130 may be 5 mm, and the distance L₆ from the accommodation part 130 to the second folding line F₂ may be 1.3 mm that is 26% of the distance L₄.

When the distance L₆ is less than 18% of the distance L₄, a spaced distance between the second folding line F₂ and the accommodation part 130 may be too much decreased. Accordingly, it may be difficult for the folding knife for pressing the second folding line F₂ to smoothly press the second folding line F₂ without interference with the accommodation part 130. When the distance L₆ is more than 34% of the distance L₄, a length of a portion (see a portion on the left of F₂ in FIG. 6), which is disposed to be adjacent to the accommodation part 130 and is not folded, of the sealing part 140 may be increased to increase the total volume occupied by the secondary battery. The increase in total volume may cause a decrease in volume energy density.

With regard to the first distance L₁ that is a distance from the outer end 140a of the sealing part 140 to the first folding line F₁, and the second distance L₂ that is a distance from the first folding line F₁ to the second folding line F₂, a ratio of the first distance L₁ to the width L_{W} of the sealing part 140 may be 34.65% to 42.35%, and a ratio of the second distance L₂ to the width L_{W} of the sealing part 140 may be 43.65% to 53.35%. In the secondary battery according to this embodiment, through optimization of the folding position, the reduction in insulation resistance may not occur or the reduction in insulation resistance may be minimized even when the sealing part 140 has been folded multiple times. In the secondary battery according to this embodiment, it was confirmed that an insulation resistance defect rate is 0.6% at 100 MΩ.

For example, the first distance L₁ may be 3.85 mm, the second distance L₂ may be 4.85 mm, and the width L_{W} of the sealing part 140 may be 10 mm. Here, the ratio of the first distance L₁ to the width L_{W} of the sealing part 140 may be 38.5%, and the ratio of the second distance L₂ to the width L_{W} of the sealing part 140 may be 48.5%.

A ratio of a distance L₅ from the second folding line F₂ to the sealing line S to the width L_{W} of the sealing part 140 may be 20% or more. For example, the distance L₅ from the second folding line F₂ to the sealing line S may be 3.7 mm, and here, the ratio of the distance L₅ to the width L_{W} of the sealing part 140 may be 37%.

The distance L₅ from the second folding line F₂ to the sealing line S may be 40% or more of the distance L₃ from the outer end 140a of the sealing part 140 to the sealing line S.

A portion 151 (from the outer end of the sealing part to the sealing line of the sealing part) of the sealing part may be sealed through fusion between the first resin layers (e.g., PP) of the exterior. A portion 152 of a remaining portion (152 and 153) (from the sealing line of the sealing part to the boundary between the sealing part and the accommodation part) of the sealing part may be temporarily bonded by heat or the like introduced during the fusing of a fused area 151 (sealed portion). This generated temporarily bonded area 152 may be approximately 20 % of the fused area 151 (e.g., 1 mm of the temporarily bonded area 152 may be generated with respect to 5 mm of the fused area 151). Here, when an interference between a folding knife for forming the second folding portion 142 (see FIG. 6) and the temporarily bonded area 152 occurs, a crack may be generated in the first resin layer to cause an insulation resistance defect. In order to suppress an occurrence of this defect, the distance L₅ may be set to two or more times the temporarily bonded area 152 (20% of L₃) .

For example, the distance L₅ from the second folding line F₂ to the sealing line S may be 3.7 mm, the distance L₃ may be 5 mm, and here, the distance L₅ may be 74% of the first distance L₁.

When, in the sealing part 140, the portion from the outer end 140a of the sealing part 140 to the sealing line S is sealed by fusion, and a portion from the sealing line S to the accommodation part 130 is not fused (as it is considered that unlike the fused area scheduled to be fused, the temporarily bonded area is not an area having been scheduled to be fused, the temporarily bonded area is regarded as an area that is not fused in this description), a ratio of the distance L₄ from the sealing line S to the accommodation part 130 to the width L_{W} of the sealing part 140 may be 40% or more. In the secondary battery according to this embodiment, in addition to the fused area 151 and the temporarily bonded area 152, the portion 153 (die-seal gap), which is not fused, of the sealing part 140 may be sufficiently secured to improve the insulation resistance defect rate.

For example, the distance L₄ from the sealing line S to the accommodation part 130 may be 5 mm, and here, the ratio of the distance L₄ to the width L_{W} of the sealing part 140 may be 50%.

For reference, as described above, the distance L₄ may be, more preferably, 45% to 55% of the width L_{W} of the sealing part 140.

The insulation resistance of the secondary battery may be calculated from a current value measured by applying a voltage (e.g., 25 V) between the negative electrode and the metal layer (e.g., aluminum layer) of the exterior (R = V/I). For example, consumption of current will not be confirmed in a normal state (state in which an electrolyte and the metal layer are not in contact with each other), and consumption of current will be confirmed in a bad state (state in which the electrolyte and the metal layer are in contact with each other to cause the current consumption by a chemical reaction on a surface of the metal layer). In addition, an insulation voltage of the secondary battery may be obtained by measuring a voltage value between the positive electrode and the metal layer (e.g., aluminum layer) of the exterior. For example, a difference in voltage will not be measured in the normal state (state in which the electrolyte and the metal layer are not in contact with each other), and a difference in potential between the positive electrode and the metal layer will be measured in the bad state (state in which the electrolyte and the metal layer are in contact with each other).

For reference, T in FIG. 4 may indicate a thickness of the accommodation part 130, and be 8.55 mm.

The description of the present invention is intended to be illustrative, and various changes and modifications can be made by those of ordinary skill in the art to which the present invention pertains, without departing from the spirit and scope of the present invention as defined by the appended claims.

Therefore, the embodiments set forth herein are to describe the technical spirit of the present invention and not to limit. The scope of the technical spirit of the present invention is not limited by the embodiments.

The protective scope of the present invention should be determined by reasonable interpretation of the appended claims and all technical concepts coming within the equivalency range of the present application should be interpreted to be in the scope of the right of the present application.

## Claims

1. A secondary battery comprising:
an electrode assembly; and
a pouch type exterior comprising an accommodation part configured to accommodate the electrode assembly, and a sealing part configured to form to surround at least a portion of the accommodation part to seal the accommodation part,
wherein the sealing part comprises:
a first folding portion provided so that an outer end of the sealing part is folded toward the accommodation part along a first folding line spaced a first distance from the outer end of the sealing part toward the accommodation part; and
a second folding portion provided so that the first folding portion is folded toward the accommodation part along a second folding line spaced a second distance from the first folding line toward the accommodation part,
wherein, when a predetermined line spaced a predetermined distance from the outer end of the sealing part toward the accommodation part is referred to as a sealing line, the sealing part comprises a sealed portion in which a portion from the outer end of the sealing part to the sealing line is sealed by fusion,
wherein, when a distance from the outer end of the sealing part to the accommodation part is referred to as a width of the sealing part, a distance from the sealing line to the accommodation part is 45% to 55% of the width of the sealing part.

2. The secondary battery of claim 1, wherein a distance from the outer end of the sealing part to the first folding line is 60% to 80% of a distance from the outer end of the sealing part to the sealing line.

3. The secondary battery of claim 1, wherein a distance from the accommodation part to the second folding line is 18% to 34% of a distance from the sealing line to the accommodation part.

4. The secondary battery of claim 1, wherein the sealing line is positioned between the first folding line and the second folding line.

5. A secondary battery comprising:
an electrode assembly; and
a pouch type exterior comprising an accommodation part configured to accommodate the electrode assembly, and a sealing part configured to form to surround at least a portion of the accommodation part to seal the accommodation part,
wherein the sealing part comprises:
a first folding portion provided so that an outer end of the sealing part is folded toward the accommodation part along a first folding line which is spaced a first distance from the outer end of the sealing part toward the accommodation part and is provided to be parallel to the outer end of the sealing part; and
a second folding portion provided so that the first folding portion is folded toward the accommodation part along a second folding line which is spaced a second distance from the first folding line toward the accommodation part and is provided to be parallel to the first folding line,
wherein, when a distance from the outer end of the sealing part to the accommodation part is referred to as a width of the sealing part, the first distance is 34.65% to 42.35% of the width of the sealing part, and the second distance is 43.65% to 53.35% of the width of the sealing part.

6. The secondary battery of claim 5, wherein, when a predetermined line, which is spaced a predetermined distance from the outer end of the sealing part toward the accommodation part and is provided to be parallel to the outer end of the sealing part, is referred to as a sealing line,
in the sealing part, a portion from the outer end of the sealing part to the sealing line is sealed by fusion,
wherein the sealing line is positioned between the first folding line and the second folding line,
wherein a distance from the second folding line to the sealing line is 20% or more of the width of the sealing part.

7. The secondary battery of claim 5, wherein, when a predetermined line, which is spaced a predetermined distance from the outer end of the sealing part toward the accommodation part and is provided to be parallel to the outer end of the sealing part, is referred to as a sealing line,
in the sealing part, a portion from the outer end of the sealing part to the sealing line is sealed by fusion,
wherein the sealing line is positioned between the first folding line and the second folding line,
wherein a distance from the second folding line to the sealing line is 40% or more of a distance from the outer end of the sealing part to the sealing line.

8. The secondary battery of claim 5, wherein, when a predetermined line, which is spaced a predetermined distance from the outer end of the sealing part toward the accommodation part and is provided to be parallel to the outer end of the sealing part, is referred to as a sealing line,
in the sealing part, a portion from the outer end of the sealing part to the sealing line is sealed by fusion, and a portion from the sealing line to the accommodation part is not fused,
wherein the sealing line is positioned between the first folding line and the second folding line,
wherein a distance from the sealing line to the accommodation part is 40% or more of the width of the sealing part.

9. A secondary battery comprising:
an electrode assembly; and
a pouch type exterior comprising an accommodation part configured to accommodate the electrode assembly, and a sealing part configured to form to surround at least a portion of the accommodation part to seal the accommodation part,
wherein the sealing part comprises:
a first folding portion provided so that an outer end of the sealing part is folded toward the accommodation part along a first folding line which is spaced a first distance from the outer end of the sealing part toward the accommodation part and is provided to be parallel to the outer end of the sealing part; and
a second folding portion provided so that the first folding portion is folded toward the accommodation part along a second folding line which is spaced a second distance from the first folding line toward the accommodation part and is provided to be parallel to the first folding line,
wherein, when a predetermined line, which is spaced a predetermined distance from the outer end of the sealing part toward the accommodation part and is provided to be parallel to the outer end of the sealing part, is referred to as a sealing line,
in the sealing part, a portion from the outer end of the sealing part to the sealing line is sealed by fusion,
wherein a distance from the second folding line to the sealing line is 40% or more of a distance from the outer end of the sealing part to the sealing line.

10. The secondary battery of claim 9, wherein the sealing line is positioned between the first folding line and the second folding line.
